# EUROPEAN PATENT APPLICATION

(11) **EP 0 714 218 A1**
(43) Date of publication of application: **29.05.1996**
(21) Application number: 94308626.4
(22) Date of filing: 23.11.1994
(51) Int. Cl.: H04Q 7/36, H04Q 7/30

(54) **Digital signal modulation in an optical fibre of a microcellular mobile communication system**

(71) Applicant: TELECOMMUNICATION LABORATORIES, DGT, MOTC., Yang-Mei, Tao-Yuan Hsien (TW)
(72) Inventor: Lin, Duo Chang, Yang-Mei, Tao-Yuan Hsien (TW); Yu, Ben Mou, Yang-Mei, Tao-Yuan Hsien (TW); Laio, Hung Huei, Yang-Mei, Tao-Yuan Hsien (TW); Wang, Hsang Jue, Yang-Mei, Tao-Yuan Hsien (TW); Cherng, Hong Long, Yang-Mei, Tao-Yuan Hsien (TW); Liaw, Jy Wang, Yang-Mei, Tao-Yuan Hsien (TW)
(74) Representative: Arthur, Bryan Edward

(57) **Abstract**

An analog-to-digital fiber microcellular for wireless personal communication network characterizes by down-convert receiving radio frequency signal to baseband, then using an analog-to-digital convertor converts to digital signal to modulate a laser diode, then transmit to remote location via fiber. At remote location, after receiving signal, using a digital-to-analog convertor converts to original baseband analog signal for continue processing. The transmission can be proceeded in increase direction by the same route et forth above.

## Description

### BACKGROUND OF THE INVENTION

### 1. FIELD OF THE INVENTION

The present invention relates to an analog to digital fiber microcellular for wireless personal communication network, for example in up link situation, which firstly down convert all the received radio frequency combined signals to low frequency band as baseband signal for further analog-to-digital conversion and then digital modulating the low cost laser diode to transmit the combined signal through fiber to optical receiver, and then apply digital-to-analog converter to recover the received digital signal to the original low frequency band combined signal for signal demodulation.

### 2. DESCRIPTION OF THE PRIOR ART

Microcellular radio communication systems are expected to provide flexible telephony services for wireless personal communications. They provide efficient utilization of frequency and offer communication services to a large number of users. They will also make portable phones smaller and can be used longer than present portable phones.

A great number of base stations are necessary compared with conventional systems to develop microcell systems. Therefore, base stations must meet the requirements of low-cost and compact.

Subcarrier optical transmission is one of the feasible solutions to these problems. New microcell system concepts have been reported by adopting subcarrier optical transmission over optical fiber between a central station and base stations. This system is well suited when a large number of base stations are set around a central station.

However, for mobile radio applications, the radio signal power received at base station fluctuates greatly, due to fading, shadowing or changes in distance between base station and portable phone. Therefor, the optical feeder from the base station to the central station require a high received carrier to noise ratio and very low distortion characteristic to cover the signal power fluctuation. And then very high expensive optical transmitters with high power, high linearity, signal mode, zero dispersion wavelength, optical isolator are required for the conventional subcarrier optical transmission applying in microcellular radio system. It is still a huge cost burden for constructing a large number of microcellular base stations in wireless communication system. All of these hinder the development of the fiber microcellular.

### SUMMARY OF THE INVENTION

It is accordingly an object of the present invention to provide a method of analog-to-digital conversion to apply in fiber microcellular, such that a low cost multi-mode low power laser diode and a simple driving circuit can be used as optical transmitter. Thereby free from intermodulation between channels resulting from nonlinearity of laser modulation and fiber transmission, greatly enhance the performance of fiber microcellular and substantially reduce the cost, thus making fiber microcellular application become more feasible and practical.

### BRIEF DESCRIPTION OF THE DRAWING

FIG. 1 is a schematic diagram of basic structure of fiber microcellular base station of the present invention.

FIG. 2 is a schematic diagram of basic structure of central station for receiving and emission conversion of the present invention.

FIG. 3 is a schematic diagram of uplink transmission principle of the present invention.

FIG. 4 is a schematic diagram of downlink transmission principle of the present invention.

### DESCRIPTION OF THE PREFERRED EMBODIMENT

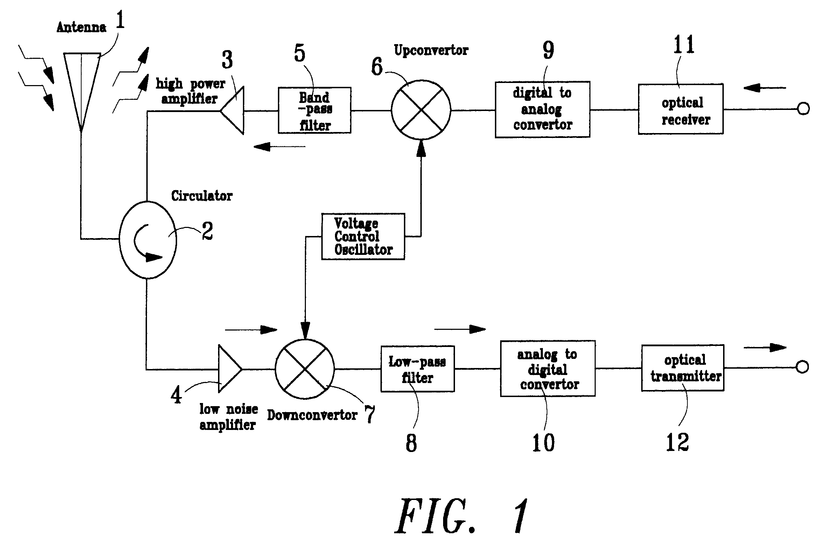

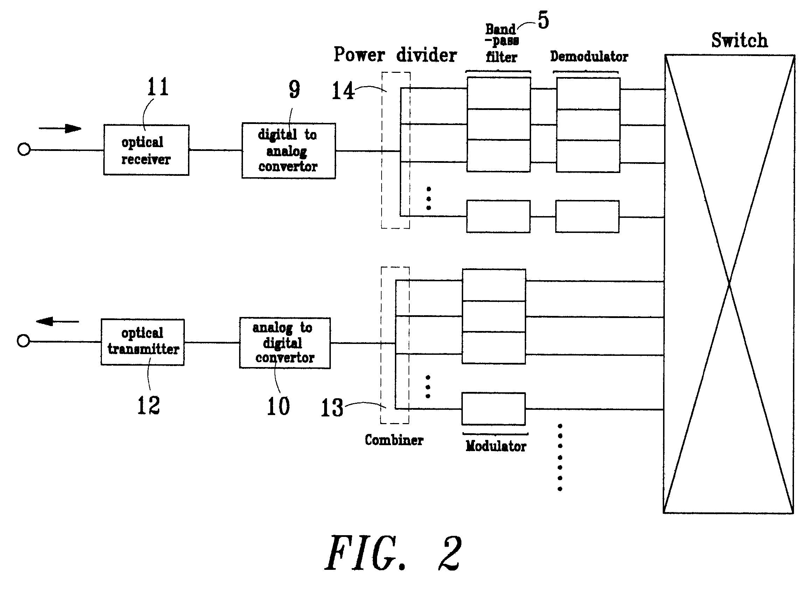

Referring to FIG. 1 and 2, there are basically two portions in the structure of the present invention as follows :
A. Basic structure of fiber microcellular, comprising antenna 1, circulator 2, high power amplifier 3, low noise amplifier 4, Band-pass filter 5, upconvertor 6, downconvertor 7, Low-pass filter 8, digital-to-analog convertor 9, analog-to-digital convertor 10, optical receiver 11, optical transmitter 12.
B. Basic structure of central station for receiving and transmission conversion, comprising optical transmitter 12, optical receiver 11, analog-to-digital convertor 10, digital-to-analog convertor 9, combiner of modulation channel signals 13, power divider for matching various demodulating channel band-pass-filter 14.

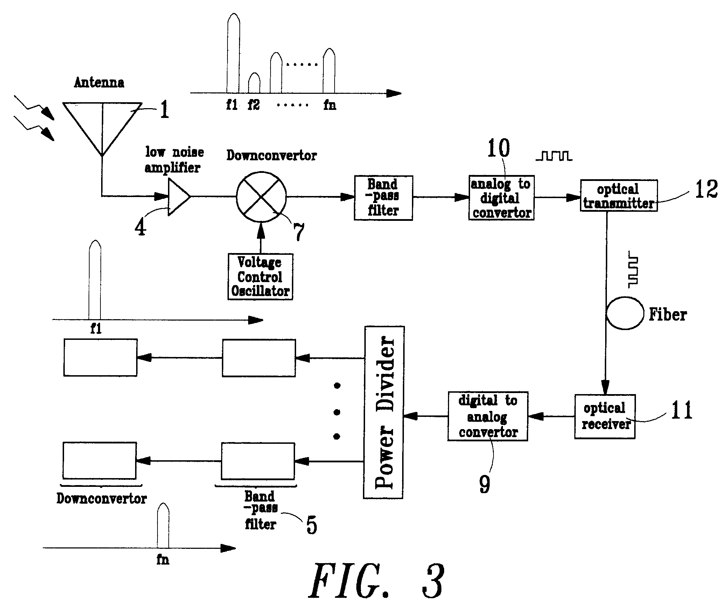

Referring to FIG 3 for an embodiment of uplink transmission principle, signals of radio frequency (RF) channel after being received by antenna 1 are down converted to low frequency band combined analog signal by low noise amplifier 4 and down convertor 7, then is converted to digital signal by fast analog-to-digital convertor 10 and directly modulate laser diode to form digital optical signal which is transmitted through fiber to another end (i.e. central station). At central station, optical receiver 11 receives and converts digital optical signal to digital electric signal, then digital-to-analog convertor 9 converts digital signal to original low frequency band combined analog signal, thereafter band-pass filter 5 of each channel separates signal of each channel for demodulating.

Digital signal transmitted by foregoing method does not affect by non-linearity of laser modulation, fiber transmission or optical receiver demodulation. Therefore an ordinary low price and low power multi-mode laser can be used. Furthermore, the performance of fiber microcellular is determined by low noise amplifier 4 and analog-to-digital convertor 10, this fiber microcellular can have very good dynamic range if the technique of nonuniform quantlzation is adopted.

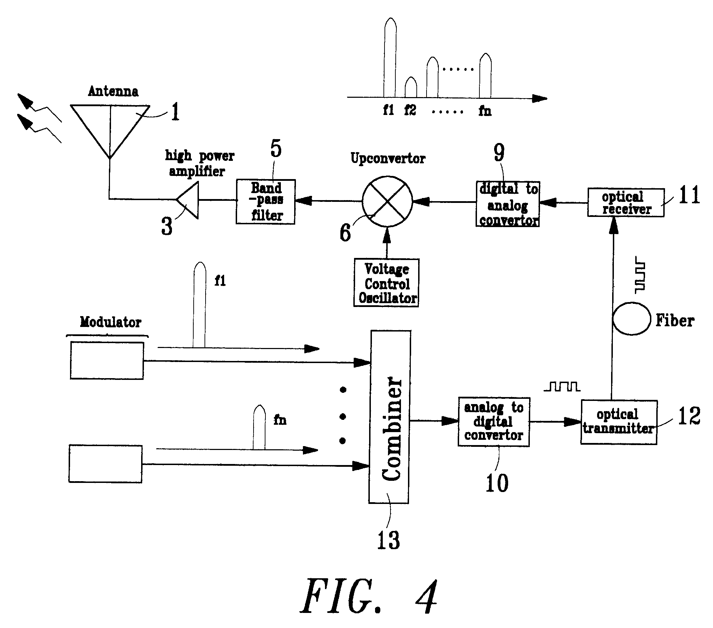

Referring to FIG. 4 for n embodiment of downlink transmission principle, at central station combiner 13 combines signal of different channels as baseband signal which is then converted to digital signal by analog-to-digital convertor 10 and then modulate laser diode. Optical transmitter 12 transmits digital optical signal via fiber to another end (fiber microcellular base station), optical receiver 11 of fiber microcellular receives digital optical signal and converts it into digital electric signal which is then converted to combined analog signal of various channels by digital-to-analog convertor 9. Thereafter upconvertor 6 and power amplifier 3 upconvert signal of various channels to proper radio frequency band and broadcast to users through antenna 1.

Like that in uplink transmission, by means of method set forth above, signal of various channels from central base station transmitted to fiber microcellular via fiber does not affect by nonlinearity of laser modulation, fiber transmission or optical receiver demodulation. Although there is no strict requirement (on) receiving dynamic range in downlink transmission, this method does resolve the crosstalk problem caused by over modulation effect of laser resulting from a great number of channels concurrently adding on when each channel directly modulates laser.

Comparing with conventional methods (i.e. subcarrier optical transmission), the present invention has the following advantages :
a. On fiber transmission, it is totally digital transmission, therefore does not affect by non-linearity of laser modulation, fiber transmission or optical receiver demodulation. As long as sampling speed is fast enough and a good performance analog-to-digital convertor is used, a very good dynamic range can be obtained and there is no restriction is laser over-modulation.
b. After evaluation of the transmission bandwidth for wireless phone and its correspondence sampling rate, and if ten bits for sampling quantization is applied, only a few hundred of Mb/s modulation speed is required. Therefore an ordinary low cost laser can meet the requirements. Furthermore, the sensitivity for the digital receiver operating at the speed of several hundred of Mb/s is less than -30dBm, compared to the - 5dBm receiver sensitivity for the conventional optical subcarrier transmission scheme. There are more than 25dB optical power margin. Thus longer transmission distance between microcellular and base station, and more system reliability can be achieved.
c. As a result of advantages set forth above, good transmission performance can be achieved by using an ordinary low cost laser diode thus significantly reduce the laser cost that might otherwise needed. It also removes the restriction of laser over modulation induced by a great number of channel modulation, thereby making microcellular applications more feasible and practical.

## Claims

1. An analog-to-digital microcellular for wireless personal communication network characterized in that a received radio frequency (RF) signal being down convert to low frequency band as baseband signal, then using an analog-to-digital convertor to convert the baseband signal to digital signal to modulate a laser diode, said laser diode transmit infrared light which transmits to a remote central station through a fiber, said remote central station receives the light and uses a digital-to-analog convertor to convert the light to original baseband signal for further process.

2. A microcellular of claim 1 further having a combiner to converge signal of various channels, then using an analog-to-digital convertor converting the converged signal and directly modulating a laser diode to generate digital optical signal, thereafter transmitting the optical signal to a remote fiber microcellular via a fiber, said fiber microcellular receives and converts the digital electric signal to analog signal by a digital-to-analog convertor, and then going through an upconvertor and a high power amplifier to upconvert the analog signal to radio frequency and broadcasting through an antenna.

3. An a-to-digital microcellular for wireless personal communication network comprising a fiber microcellular base station and a central station, said fiber microcellular base station having:
an antenna for receiving and emitting signal of radio frequency channel;
a circulator for isolating the received and emitted radio frequency channel.
a high power amplifier and upconvertor upconverting for signal from low frequency band to a desired radio frequency band and emitting to users via a portable phone;
a band-pass filter for selecting desired emitting channel frequency band;
a digital-to-analog convertor for converting receiving digital signal to analog combined baseband signal to facilitate signal emission,
an optical receiver for receiving digital signal transmitting from said central station;
a low noise amplifier and down-convertor for down convert radio frequency signal received from said antenna to low frequency band combined signal as base band singal;
a low-pass fiber for filtering high frequency noise signal;
an analog-to-digital convertor for converting analog signal to digital signal and directly modulating a laser diode;
an optical transmitter for converting digital electric signal to digital optical signal and transmitting to said central base station through a fiber; and
said central base station having :
an optical receiver for receiving optical signal from said fiber microcellular base station;
a digital-to-analog convertor for converting received digital signal to analog signal;
a divider to associate said band pass filter of each channel to separate signal of each channel for respective demodulation;
an optical transmitter for converting digital electric signal to optical signal to transmit to said fiber microcellular base station via a fiber;
an analog-to-digital convertor for converting analog signal to digital signal and directly modulating a laser diode;
a combiner for converging signal of different channels to combined analog signal and converting to digital signal through said analog-to-digital convertor and directly modulating a laser diode.
